# EUROPÄISCHE PATENTSCHRIFT

(11) **EP 3 645 307 B1**
(45) Veröffentlichungstag und Bekanntmachung des Hinweises auf die Patenterteilung: **11.08.2021**
(21) Anmeldenummer: 18724528.7
(22) Anmeldetag: 14.05.2018
(51) Int. Cl.: B60C 1/00, C07F 7/18, C08K 5/548

(54) **SILAN, KAUTSCHUKMISCHUNG ENTHALTEND DAS SILAN UND FAHRZEUGREIFEN, DER DIE KAUTSCHUKMISCHUNG IN WENIGSTENS EINEM BAUTEIL AUFWEIST**
SILANE, RUBBER MIXTURE CONTAINING THE SILANE AND VEHICLE TYRE HAVING THE RUBBER MIXTURE IN AT LEAST ONE COMPONENT
SILANE, MÉLANGE DE CAOUTCHOUC CONTENANT LE SILANE ET PNEUMATIQUE DE VÉHICULE QUI COMPREND LE MÉLANGE DE CAOUTCHOUC DANS AU MOINS UN ÉLÉMENT

(30) Priorität: 30.06.2017 DE 102017211109
(43) Veröffentlichungstag der Anmeldung: 06.05.2020
(73) Patentinhaber: Continental Reifen Deutschland GmbH, 30165 Hannover (DE)
(72) Erfinder: JACOB, Andreas, 30449 Hannover (DE); DAUER, David-Raphael, 30167 Hannover (DE); STROHMEIER, Julian, 37574 Einbeck (DE); SCHÖFFEL, Julia, 30453 Hannover (DE); RECKER, Carla, 30167 Hannover (DE); SCHWEKENDIEK, Kirsten, 31515 Wunstorf (DE); MÜLLER, Norbert, 29336 Nienhagen (DE)
(74) Vertreter: Continental Corporation
(86) Internationale Anmeldenummer: PCT/EP2018/062291
(87) Internationale Veröffentlichungsnummer: WO 2019/001822

(56) Entgegenhaltungen:
- EP-A1- 2 944 640
- WO-A1-2015/172915
- JP-A- 2002 201 312
- MASAHIRO FUJIWARA ET AL: "Switching catalytic reaction conducted in pore void of mesoporous material by redox gate control", CHEMICAL COMMUNICATIONS, Nr. 44, 1. Januar 2006 (2006-01-01), Seite 4635, XP055357993, ISSN: 1359-7345, DOI: 10.1039/b610444d
- CHUNYU YANG ET AL: "Fe 3 O 4 @mSiO 2 core-shell nanocomposite capped with disulfide gatekeepers for enzyme-sensitive controlled release of anti-cancer drugs", JOURNAL OF MATERIALS CHEMISTRY B, Bd. 3, Nr. 6, 1. Januar 2015 (2015-01-01), Seiten 1010-1019, XP055489391, GB ISSN: 2050-750X, DOI: 10.1039/C4TB01788A

## Beschreibung

Die Erfindung betrifft ein Silan, eine Kautschukmischung enthaltend das Silan und einen Fahrzeugreifen, der die Kautschukmischung in wenigstens einem Bauteil aufweist.

Silane sind als Zuschlagstoffe für Kautschukmischungen, insbesondere für Fahrzeugreifen, bekannt, und zwar insbesondere für Kautschukmischungen, die wenigstens eine Kieselsäure als Füllstoff enthalten. Im Stand der Technik bekannte Silane gehen beispielsweise aus der DE 2536674 C3 und der DE 2255577 C3 hervor. Die Kieselsäure wird dabei mittels derartiger Silane an das oder die Polymer(e) angebunden, wodurch die Silane auch als Kupplungsagenzien bezeichnet werden. Durch die Anbindung der Kieselsäure mittels Silan-Kupplungsagenzien ergeben sich Vorteile hinsichtlich des Rollwiderstandsverhaltens und der Prozessierbarkeit der Kautschukmischung. Hierzu weist das Silan üblicherweise wenigstens eine Schwefelgruppierung auf, die an der Vulkanisation der Kautschukmischung beteiligt ist.
Neben den genannten Eigenschaften spielen aber auch weitere Eigenschaften der Kautschukmischung, insbesondere bei der Anwendung im Fahrzeugreifen, eine wichtige Rolle, wie insbesondere die Steifigkeit der Mischung, die sich u. a. auf das Handling-Verhalten des Fahrzeugreifens auswirkt.

In der WO 2015/172915 A1 wird eine Kautschukmischung enthaltend ein harnstoffhaltiges Silan offenbart, die im Vergleich zum Stand der Technik eine höhere Steifigkeit bei nahezu gleichbleibenden Indikatoren für Rollwiderstand und Nassgriff aufweist. Die Harnstoffgruppe ist hierbei im sogenannten Spacer, also der Abstandsgruppe zwischen Silizium (Anbindung an den Füllstoff) und Schwefel (Anbindung an den Dienkautschuk) enthalten.

In der JP P2002-201312 A werden Silane für Kautschukmischungen vorgeschlagen, die eine Harnstoffgruppierung oder ein Säureamid und einen Phenyl-Rest in der Abstandsgruppe aufweisen, wodurch eine verbesserte Dispersion von Ruß oder Kieselsäure als Füllstoffe in der Kautschukmischung erzielt werden könnte.

Der vorliegenden Erfindung liegt die Aufgabe zugrunde, ein neuartiges Silan bereitzustellen und eine Kautschukmischung mit dem Silan bereitzustellen, wodurch im Vergleich zum Stand der Technik eine weitere Verbesserung der Steifigkeit und damit der Handling-Prediktoren der Kautschukmischung, insbesondere für die Anwendung im Fahrzeugreifen, erzielt wird.

Gelöst wird die Aufgabe durch das erfindungsgemäße Silan gemäß Anspruch 1, die erfindungsgemäße Kautschukmischung enthaltend das Silan sowie den erfindungsgemäßen Fahrzeugreifen, der die erfindungsgemäße Kautschukmischung in wenigstens einem Bauteil aufweist.

Das erfindungsgemäße Silan weist folgende Formel I) auf:

I) (R¹)ₒSi-R²-X-A-Y-[A-Y-]ₘ-A-Sk-A-[-Y-A]ₘ-Y-A-X-R²-Si(R¹)ₒ,

wobei o = 1, 2 oder 3 sein kann und k eine ganze Zahl größer oder gleich 2 ist und die Reste R¹ innerhalb der Silylgruppen (R¹)ₒSi- und auf beiden Seiten des Moleküls gleich oder verschieden voneinander sein können und ausgewählt sind aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen, Arylgruppen mit 6 bis 20 Kohlenstoffatomen, Alkylgruppen mit 1 bis 10 Kohlenstoffatomen, Alkenylgruppen mit 2 bis 20 Kohlenstoffatomen,
Alkinylgruppen mit 2 bis 20 Kohlenstoffatomen, Aralkylgruppen mit 7 bis 20 Kohlenstoffatomen, Halogeniden oder
Alkylpolyethergruppen -O-(R⁶-O)ᵣ-R^{S} wobei R⁶ gleich oder verschieden sind und verzweigte oder unverzweigte, gesättigte oder ungesättigte, aliphatische, aromatische oder gemischt aliphatisch/aromatische zweibindige C₁-C₃₀-Kohlenwasserstoffgruppen sind, vorzugsweise -CH₂-CH₂-, r eine ganze Zahl von 1 bis 30, vorzugsweise 3 bis 10 ist, und R⁵ unsubstituierte oder substituierte, verzweigte oder unverzweigte, einbindige Alkyl-, Alkenyl-, Aryl- oder Aralkylgruppen, vorzugsweise -C₁₃H₂₇ Alkyl-Gruppe sind
   oder
zwei R¹ bilden eine cyclische Dialkoxygruppe mit 2 bis 10 Kohlenstoffatomen wobei dann o < 3 ist,
oder es können zwei oder mehr Silane gemäß Formel I) über Reste R¹ verbrückt sein; und
wobei die Reste R² innerhalb eines Moleküls gleich oder verschieden sein können und lineare oder verzweigte Alkylgruppen mit 1 bis 20 Kohlenstoffatomen oder Cycloalkylgruppen mit 4 bis 12 Kohlenstoffatomen oder Arylgruppen mit 6 bis 20 Kohlenstoffatomen oder Alkenylgruppen mit 2 bis 20 Kohlenstoffatomen, Alkinylgruppen mit 2 bis 20 Kohlenstoffatomen oder Aralkylgruppen mit 7 bis 20 Kohlenstoffatomen beinhalten; und
wobei die Gruppen X innerhalb eines Moleküls gleich oder verschieden voneinander sein können und ausgewählt sind aus den Gruppen -HNC(=O)-, -C(=O)NH-, -C(=O)O-, -OC(=O)-, -OC(=O)NH-, -HNC(=O)O-, -R³NC(=O)NR³⁻, -R³NC(=NR³)NR³-, -R³NC(=S)NR³-, wobei die Reste R³ innerhalb einer Gruppe X und eines Moleküls gleich oder verschieden sein können und ausgewählt sind aus einem Wasserstoffatom oder wie für R² definiert unter der Bedingung, dass wenigstens ein R³ innerhalb einer jeden Gruppe X ein Wasserstoffatom ist; und
wobei die Gruppen A innerhalb eines Moleküls gleich oder verschieden voneinander sein können und aromatische Gruppen sind, und
wobei die Gruppen Y innerhalb eines Moleküls gleich oder verschieden voneinander sein können und ausgewählt sind aus den Gruppen -HNC(=O)-, -C(=O)NH-, -C(=O)O-, -OC(=O)-, -OC(=O)NH-, -HNC(=O)O-, -R⁴NC(=O)NR⁴-, -R⁴NC(=NR⁴)NR⁴-, -R⁴NC(=S)NR⁴-, wobei die Reste R⁴ innerhalb einer Gruppe Y und eines Moleküls gleich oder verschieden sein können und ausgewählt sind aus einem Wasserstoffatom oder wie für R² definiert unter der Bedingung, dass wenigstens ein R⁴ innerhalb einer jeden Gruppe Y ein Wasserstoffatom ist; und wobei jedes m unabhängig voneinander eine ganze Zahl von 0 bis 4 ist, und wobei das Silan auch in Form von Oligomeren vorliegen kann, die durch Hydrolyse und Kondensation von Silanen der Formel I) entstehen.

Im Vergleich zu aus dem Stand der Technik bekannten Silanen weist das erfindungsgemäße Silan mit der Gruppe -R²-X-A-Y-[A-Y-]ₘ-A- eine vergleichsweise lange und rigide Abstandsgruppe auf, die wenigstens zwei aromatische Gruppen A und die Verknüpfungseinheiten X und Y umfasst. Hierdurch wird erfindungsgemäß ein neuartiges Silan bereitgestellt. Eine Kautschukmischung, die das erfindungsgemäße Silan enthält, weist überraschenderweise eine höhere und damit verbesserte Steifigkeit auf, welche insbesondere auf die zwei vorhandenen aromatischen Gruppen A in Kombination mit den Verknüpfungseinheiten X und Y innerhalb einer Abstandsgruppe (d. h. auf jeder Seite der Sₖ-Gruppierung) zurückgeführt werden könnte. Die erfindungsgemäße Kautschukmischung weist somit verbesserte Handling-Prediktoren auf und der erfindungsgemäße Fahrzeugreifen zeigt u. a. ein verbessertes Handling-Verhalten.

Im Folgenden werden das erfindungsgemäße Silan und dessen bevorzugte Ausführungsformen erläutert. Sämtliche Aspekte gelten auch für das Silan in der erfindungsgemäßen Kautschukmischung und im erfindungsgemäßen Fahrzeugreifen.

Wie in Formel I) dargestellt, ist der allgemeine prinzipielle Aufbau des Silans symmetrisch, wobei die Sₖ-Gruppe als Mittelpunkt angesehen wird. Allerdings können einzelne Gruppierungen und Parameter auf beiden Seiten unterschiedlich sein, sodass das Molekül im speziellen nicht spiegelsymmetrisch sein muss.
Bevorzugt sind die Gruppierungen und Parameter auf beiden Seiten der Sₖ-Gruppe gleich, wodurch eine vergleichsweise einfache Syntheseroute möglich ist.

In der Formel I) können die m auf beiden Seiten jeweils unabhängig voneinander Werte von 0 bis 4 annehmen. Die Gruppierung [A-Y-] kann somit zusätzlich auf jeweils beiden Seiten oder nur auf einer Seite der Schwefelgruppierung Sₖ mit m =1 im Molekül vorhanden sein, womit das Silan auf jeder Seite oder nur auf einer Seite drei aromatische Gruppen A aufweist oder sich mit m = 2 oder 3 oder 4 auf einer oder beiden Seiten unabhängig voneinander wiederholen, wodurch sich die Zahl der aromatischen Gruppen A entsprechend erhöht. Gemäß einer bevorzugten Ausführungsform der Erfindung ist m auf beiden Seiten gleich 0, d .h. bevorzugt ist jedes m = 0. Ein derartiges Molekül ist vergleichsweise einfach herzustellen, wobei das erfindungsgemäße Wesen des Moleküls, nämlich die dann zwei vorhandenen aromatischen Gruppen auf jeder Seite in Kombination mit den Verknüpfungen X und Y in der Abstandsgruppe vorhanden ist, sodass hiermit bereits eine verbesserte Steifigkeit in der Kautschukmischung erzielt wird.

Die Gruppen X können wie zu Formel I) ausgeführt innerhalb eines Moleküls gleich oder verschieden voneinander sein und sind ausgewählt aus den Gruppen -HNC(=O)-, -C(=O)NH-, -C(=O)O-, -OC(=O)-, -OC(=O)NH-, -HNC(=O)O-, -R³NC(=O)NR³⁻, -R³NC(=NR³)NR³-, -R³NC(=S)NR³-, wobei die Reste R³ innerhalb einer Gruppe X und eines Moleküls gleich oder verschieden sein können und ausgewählt sind aus einem Wasserstoffatom oder wie für R² definiert unter der Bedingung, dass wenigstens ein R³ innerhalb einer jeden Gruppe X ein Wasserstoffatom ist.
Die Gruppen -HNC(=O)- und -C(=O)NH- sind Carbonsäureamidgruppen, wobei die beiden unterschiedlichen Schreibweisen die möglichen Konnektivitäten innerhalb des Moleküls zum Ausdruck bringen sollen. Es ist somit denkbar, dass das Stickstoffatom der Gruppe X in der Ausführung Säureamid an der aromatischen Gruppe A anknüpft oder an dem Rest R².

Die Gruppen -C(=O)O- und -OC(=O)- sind Estergruppen, wobei auch hier mit den beiden Schreibweisen analog zu den Säureamidgruppen die unterschiedlichen Konnektivitäten hinsichtlich A und R² gemeint sind.
Die Gruppen -OC(=O)NH- und -HNC(=O)O- sind Urethangruppen, wobei auch hier mit den beiden Schreibweisen analog zu den Säureamidgruppen die unterschiedlichen Konnektivitäten hinsichtlich A und R² gemeint sind.
Die Gruppe -R³NC(=O)NR³- stellt eine Harnstoffgruppe dar, wobei wenigstens einer der Reste R³ ein Wasserstoffatom ist.
Die Gruppe -R³NC(=NR³)NR³- stellt eine Guanidingruppe dar, wobei wenigstens einer der Reste R³ ein Wasserstoffatom ist.
Die Gruppe -R³NC(=S)NR³- stellt eine Thioharnstoffgruppe dar, wobei wenigstens einer der Reste R³ ein Wasserstoffatom ist.
Bevorzugt ist jedes der R³ einer jeden Gruppe X ein Wasserstoffatom.
Für den Fall, dass R³ ein organischer Rest ist wie für R² definiert, ist es besonders bevorzugt, wenn R³ ausgewählt ist aus Alkylresten mit 1 bis 7 Kohlenstoffatomen oder aromatischen Resten mit 6 bis 10 Kohlenstoffatomen, wie z. B. einem Phenylrest. Bevorzugt ist es, dass die Gruppen X ausgewählt sind aus den Gruppen -HNC(=O)-, - C(=O)NH-, -OC(=O)NH-, -HNC(=O)O-, -R³NC(=O)NR³⁻, -R³NC(=NR³)NR³-, - R³NC(=S)NR³-, und zwar mit der oben genannten Bedingung für R³.
Besonders bevorzugt sind die Gruppen X ausgewählt aus den Gruppen -HNC(=O)-, - C(=O)NH-, -OC(=O)NH-, -HNC(=O)O-, -R³NC(=O)NR³⁻, wiederum bevorzugt aus den Gruppen -HNC(=O)-, -C(=O)NH-, -R³NC(=O)NR³-.
Gemäß einer besonders vorteilhaften Ausführungsform der Erfindung ist X auf beiden Seiten des Moleküls gleich und eine Harnstoffgruppe -HNC(=O)NH- mit jedem R³ = Wasserstoffatom.

Die Gruppen Y können wie zu Formel I) ausgeführt innerhalb eines Moleküls gleich oder verschieden voneinander sein und sind ausgewählt aus den Gruppen -HNC(=O)-, -C(=O)NH-, -C(=O)O-, -OC(=O)-, -OC(=O)NH-, -HNC(=O)O-, -R⁴NC(=O)NR⁴-, -R⁴NC(=NR⁴)NR⁴-, -R⁴NC(=S)NR⁴-, wobei die Reste R⁴ innerhalb einer Gruppe Y und eines Moleküls gleich oder verschieden sein können und ausgewählt sind aus einem Wasserstoffatom oder wie für R² definiert unter der Bedingung, dass wenigstens ein R⁴ innerhalb einer jeden Gruppe Y ein Wasserstoffatom ist.
Für die jeweiligen Gruppen gelten die obigen Ausführungen zu X.
Auch jedes R⁴ ist bevorzugt in den jeweiligen Gruppen ein Wasserstoffatom. Für den Fall, dass R⁴ ein organischer Rest ist wie für R² definiert, ist es besonders bevorzugt, wenn R⁴ ausgewählt ist aus Alkylresten mit 1 bis 7 Kohlenstoffatomen oder aromatischen Resten mit 6 bis 10 Kohlenstoffatomen, wie z. B. einem Phenylrest.

Bevorzugt ist es, dass die Gruppen Y ausgewählt sind aus den Gruppen -HNC(=O)-, -C(=O)NH-, -OC(=O)NH-, -HNC(=O)O-, -R⁴NC(=O)NR⁴-, -R⁴NC(=NR⁴)NR⁴-, -R⁴NC(=S)NR⁴-, und zwar mit der oben genannten Bedingung für R⁴. Besonders bevorzugt sind die Gruppen Y ausgewählt aus den Gruppen -HNC(=O)-, -C(=O)NH-, -OC(=O)NH-, -HNC(=O)O-, -R⁴NC(=O)NR⁴-, wiederum bevorzugt aus den Gruppen -HNC(=O)-, -C(=O)NH-, -R³NC(=O)NR³-.
Gemäß einer besonders vorteilhaften Ausführungsform der Erfindung ist Y auf beiden Seiten des Moleküls gleich und eine Säureamidgruppe -HNC(=O)- oder -C(=O)NH-. Bevorzugt ist hierbei eine Konnektivität, die am einfachen Beispiel mit m = 0 folgendermaßen aussieht:

(R¹)ₒSi-R²-X-A-HN-C(=O)-A-Sₖ-.

Das Stickstoffatom der Säureamidgruppe ist somit gemäß dieser bevorzugten Ausführungsform auf beiden Seiten des Moleküls an diejenige aromatische Gruppe A angebunden, die X und Y verknüpft. Diese bevorzugte Ausführung ist nicht auf m = 0 beschränkt, sondern gilt für alle Kombinationen der beiden m mit Werten von 0 bis 4.

Bei den aromatischen Gruppen A kann es sich prinzipiell um jede aromatische Gruppe handeln, wobei die A innerhalb eines Moleküls und auf jeder Seite des Moleküls gleich oder verschieden zueinander sein können. Die aromatischen Gruppen A können hierbei Heteroatome enthalten und/oder an einem oder mehreren Atomen des aromatischen Gerüstes Substituenten (für ein jeweiliges Wasserstoffatom) tragen, und zwar zusätzlich zu den formelgemäßen Substituenten X, Y und Sₖ.

Bevorzugt ist es, dass die aromatischen Gruppen A ausgewählt sind aus der Gruppe bestehend aus Phenyl-, Naphthyl-, Pyridyl-, Pyridazyl-, Pyrimidyl-, Pyrazyl-, Triazyl-, Chinolyl-, Pyrrol-, Furan-, Thiophen-, Pyrazol-, Imidazol-, Thiazol- und Oxazol-Resten. Die Gruppen A verbinden X und Y sowie Y und Sₖ sowie Y und Y im Fall von m = 1 bis 4, wobei X, Y und Sₖ formal jeweils auch Substituenten der jeweiligen aromatischen Gruppe A sind.
Die Verknüpfung der genannten Gruppen an der jeweiligen aromatischen Gruppe kann dabei über alle denkbaren Atome des aromatischen Gerüsts erfolgen. Bei einem monozyklischen Aromaten mit sechs Gerüstatomen wie einem Phenylrest heißt das z. B., dass die Gruppen in para-, meta- oder ortho- Position zueinander angeordnet sein können. Gemäß einer besonders vorteilhaften Ausführungsform der Erfindung sind alle A auf beiden Seiten des Moleküls Phenyl-Reste.

Gemäß einer bevorzugten Ausführungsform der Erfindung sind X und Y sowie Y und Sₖ sowie Y und Y im Fall von m = 1 bis 4 jeweils in para-Stellung zueinander an der jeweiligen aromatischen Gruppe A angeordnet.
Hierdurch ergibt sich eine längliche Molekülstruktur des Silans, die insbesondere in einer Kautschukmischung zu einer weiteren Erhöhung von deren Steifigkeit beitragen kann.

Gemäß einer weiteren bevorzugten Ausführungsform der Erfindung sind X und Y sowie Y und Y im Fall von m = 1 bis 4 in para-Stellung sowie Y und Sₖ jeweils in ortho-Stellung zueinander an der jeweiligen aromatischen Gruppe A angeordnet.
Hierdurch ergibt sich eine rigide Molekülstruktur des Silans, die insbesondere in einer Kautschukmischung zu einer weiteren Erhöhung von deren Steifigkeit beitragen kann.

Die Reste R¹ des erfindungsgemäßen Silans können innerhalb der Silylgruppen (R¹)ₒSi- und auf beiden Seiten des Moleküls gleich oder verschieden voneinander sein und sind ausgewählt aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen, Arylgruppen mit 6 bis 20 Kohlenstoffatomen, Alkylgruppen mit 1 bis 10 Kohlenstoffatomen, Alkenylgruppen mit 2 bis 20 Kohlenstoffatomen, Alkinylgruppen mit 2 bis 20 Kohlenstoffatomen, Aralkylgruppen mit 7 bis 20 Kohlenstoffatomen, Halogeniden oder
Alkylpolyethergruppen -O-(R⁶-O)ᵣ-R^{S} wobei R⁶ gleich oder verschieden sind und verzweigte oder unverzweigte, gesättigte oder ungesättigte, aliphatische, aromatische oder gemischt aliphatisch/aromatische zweibindige C₁-C₃₀-Kohlenwasserstoffgruppen sind, vorzugsweise -CH₂-CH₂-, r eine ganze Zahl von 1 bis 30, vorzugsweise 3 bis 10 ist, und R⁵ unsubstituierte oder substituierte, verzweigte oder unverzweigte, einbindige Alkyl-, Alkenyl-, Aryl- oder Aralkylgruppen, vorzugsweise -C₁₃H₂₇ Alkyl-Gruppe sind
oder
zwei R¹ bilden eine cyclische Dialkoxygruppe mit 2 bis 10 Kohlenstoffatomen wobei dann o < 3 ist,
oder es können zwei oder mehr Silane gemäß Formel I) über Reste R¹ verbrückt sein. Sämtliche genannten Reste R¹ und Verknüpfungen können innerhalb einer Silyl-Gruppe miteinander kombiniert sein.

Für den Fall, dass zwei Silane gemäß Formel I) mit einander verbrückt sind, teilen sie sich einen Rest R¹. Auf diese Weise können auch mehr als zwei Silane aneinander verknüpft sein. Im Anschluss an die Synthese des Silans gemäß Formel I) ist es somit denkbar, dass zwei Silane gemäß Formel I) über die Reste R¹ miteinander verbrückt werden. Auf diese Weise können auch mehr als zwei Silane aneinander verknüpft werden, wie beispielsweise über Dialkoxygruppen.
Das erfindungsgemäße Silan kann auch Oligomere umfassen, die durch Hydrolyse und Kondensation der Silane der Formel I) entstehen.

Das Silan gemäß Formel I) umfasst bevorzugt in jeder Silylgruppe (R¹)ₒSi- wenigstens einen Rest R¹, der als Abgangsgruppe dienen kann, wie insbesondere Alkoxy-Gruppen oder sämtliche andere der genannten Gruppen, die mit einem Sauerstoffatom an das Siliziumatom gebunden sind, oder Halogenide.

Es ist bevorzugt, dass die Reste R¹ Alkylgruppen mit 1 bis 6 Kohlenstoffatomen oder Alkoxygruppen mit 1 bis 6 Kohlenstoffatomen oder Halogenide umfassen, besonders bevorzugt sind Alkoxygruppen mit 1 bis 6 Kohlenstoffatomen.
Gemäß einer besonders vorteilhaften Ausführungsform der Erfindung sind die Reste R¹ innerhalb einer Silylgruppe (R¹)ₒSi- gleich und Alkoxygruppen mit 1 oder 2 Kohlenstoffatomen, also Methoxygruppen oder Ethoxygruppen, ganz besonders bevorzugt Ethoxygruppen, wobei o = 3 ist.
Aber auch bei Oligomeren oder im Fall, dass zwei R¹ eine Dialkoxy-Gruppe bilden, sind die übrigen Reste R¹ bevorzugt Alkylgruppen mit 1 bis 6 Kohlenstoffatomen oder Halogenide oder Alkoxygruppen mit 1 bis 6 Kohlenstoffatomen, bevorzugt 1 oder 2 Kohlenstoffatomen, also Methoxygruppen oder Ethoxygruppen, ganz besonders bevorzugt Ethoxygruppen.

Die Reste R² des erfindungsgemäßen Silans können innerhalb eines Moleküls gleich oder verschieden voneinander sein und sind lineare oder verzweigte Alkylgruppen mit 1 bis 20 Kohlenstoffatomen oder Cycloalkylgruppen mit 4 bis 12 Kohlenstoffatomen oder Arylgruppen mit 6 bis 20 Kohlenstoffatomen oder Alkenylgruppen mit 2 bis 20 Kohlenstoffatomen, Alkinylgruppen mit 2 bis 20 Kohlenstoffatomen oder Aralkylgruppen mit 7 bis 20 Kohlenstoffatomen.
Es ist bevorzugt, dass die Reste R² lineare oder verzweigte Alkylgruppen mit 2 bis 8 Kohlenstoffatomen oder Cycloalkylgruppen mit 4 bis 8 Kohlenstoffatomen, wie insbesondere Cyclohexylreste, sind.
Gemäß einer besonders vorteilhaften Ausführungsform der Erfindung sind alle Reste R² innerhalb eines Moleküls gleich und Alkylreste mit 2 bis 6 Kohlenstoffatomen, bevorzugt 2 bis 4 Kohlenstoffatomen, insbesondere bevorzugt 2 oder 3 Kohlenstoffatome, wobei Propylreste mit 3 Kohlenstoffatomen ganz besonders bevorzugt sind.

Die Gruppierung Sₖ stellt eine Sulfidbrücke aus k Schwefelatomen dar, wobei die k Schwefelatome aneinandergereiht sind, sodass das Molekül eine polysulfidische Gruppierung aufweist. Der Index k ist dabei eine ganze Zahl größer oder gleich 2.

Bevorzugt ist k eine ganze Zahl von 2 bis 10 (einschließlich 2 und 10), besonders bevorzugt 2 bis 8, ganz besonders bevorzugt 2, 3 oder 4.
Wie dem Fachmann bekannt, lässt sich eine synthesebedingt erhaltene Disulfidgruppierung in einem weiteren Verfahrensschritt unter Zugabe von elementaren Schwefel durch Aufschwefelung in Polysulfide überführen, wodurch k größer oder gleich 3 erhalten wird, siehe hierzu Wang et al., Journal of Sulfur Chemistry, 2013, 34, 55-66.
Prinzipiell kann die Aufschwefelung auch zu einem früheren Verfahrensstadium vorgenommen werden, wie insbesondere bei den Ausgangsmolekülen bei der Synthese, sodass das Molekül gemäß Formel I) als Polysulfid mit k größer oder gleich 3 synthetisiert sein kann.

Gemäß einer besonders vorteilhaften Ausführungsform der Erfindung ist k gleich 2, sodass das Molekül eine disulfidische Gruppierung aufweist.

In einer besonders bevorzugten und beispielhaften Ausführungsform der Erfindung weist das erfindungsgemäße Silan die folgende Formel II) auf:

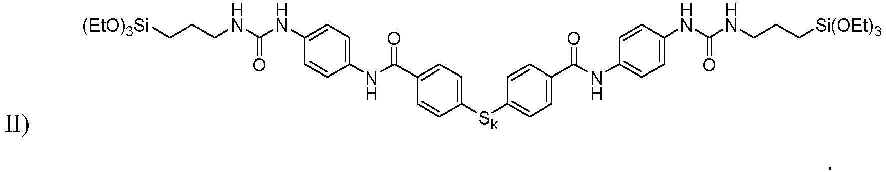

Hierbei sind im Hinblick auf Formel I) m = 0, alle R¹ Ethoxygruppen, beide R² Propylreste, beide X Harnstoffgruppen, alle A Phenylreste, wobei alle Verknüpfungen in para-Stellung angeordnet sind und jedes Y eine Säureamidgruppe, dessen Stickstoffatom an den jeweiligen Phenylrest zur Harnstoffgruppe (X) angeknüpft ist.

Das Silan gemäß Formel II) stellt ein bevorzugtes erfindungsgemäßes Beispiel dar. Hiermit wird eine besonders hohe Steifigkeit und geringe Rückprallelastizität in der erfindungsgemäßen Kautschukmischung erzielt. Letztere weist somit verbesserte Handling- und Nassbrems-Indikatoren auf.
Besonders bevorzugt ist k hierbei gleich 2, wodurch sich die genannten Vorteile in besonderem Maße ergeben.
Ein beispielhaftes und bevorzugtes Silan mit k = 2 ist in Formel IV) dargestellt:

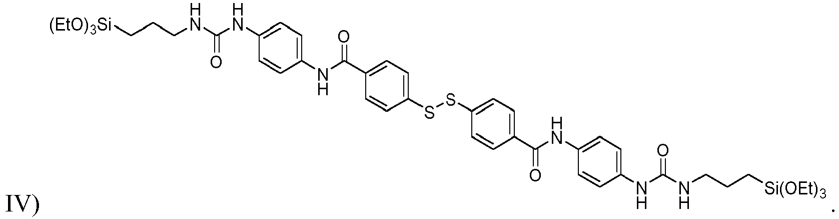

In einer weiteren besonders bevorzugten und beispielhaften Ausführungsform der Erfindung weist das erfindungsgemäße Silan die folgende Formel III) auf:

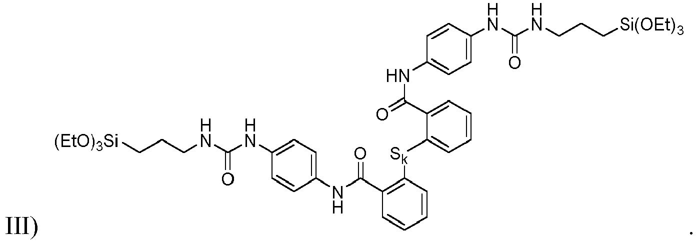

Hierbei sind im Hinblick auf Formel I) m = 0, alle R¹ Ethoxygruppen, beide R² Propylreste, beide X Harnstoffgruppen, alle A Phenylreste, wobei im Unterschied zu Formel II) die Sₖ-Gruppe und die jeweilige Säureamidgruppe am Phenylrest in ortho-Stellung zueinander angeordnet sind.

Das Silan gemäß Formel III) stellt ein bevorzugtes erfindungsgemäßes Beispiel dar. Hiermit wird eine besonders hohe Steifigkeit in der erfindungsgemäßen Kautschukmischung erzielt. Letztere weist somit verbesserte Handling-Indikatoren auf.

Besonders bevorzugt ist k hierbei gleich 2, wodurch sich die genannten Vorteile in besonderem Maße ergeben.
Ein beispielhaftes und bevorzugtes Silan mit k = 2 ist in Formel V) dargestellt.

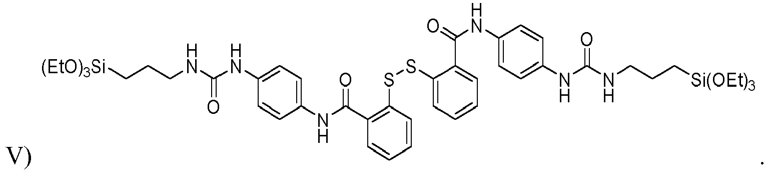

Die erfindungsgemäße Kautschukmischung enthält wenigstens ein erfindungsgemäßes Silan. Es ist prinzipiell denkbar, dass die Kautschukmischung mehrere erfindungsgemäße Silane unterschiedlicher Ausführungsformen, also mit ggf. unterschiedlichen Gruppen X, Z, A, R¹, R², ggf. R³, unterschiedlichen Verknüpfungen an den aromatischen Gruppen A, sowie mit unterschiedlichen Werten k und/oder m im Gemisch enthält. Insbesondere kann die Kautschukmischung auch ein Gemisch zweier oder mehrerer Silane I), II), III), IV) oder V) enthalten. Die Kautschukmischung kann das erfindungsgemäße Silan gemäß den gezeigten Formeln I) bis V) auch in Kombination mit anderen im Stand der Technik bekannten Silanen enthalten.

Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:
-SCN, -SH, -NH₂ oder -Sx- (mit x = 2 bis 8).
So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S® der Firma Evonik) zugesetzt werden.
Im Stand der Technik bekannt ist auch ein Silan-Gemisch, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 266® der Firma Evonik erhältlich, welches z.B. in der DE 102006004062 A1 beschrieben ist.
Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT (z.B. 3-(Octanoylthio)-1-Propyl-Triethoxysilan) in verschiedenen Varianten von der Firma Momentive, USA, oder solche, die unter dem Namen VP Si 363® von der Firma Evonik Industries vertrieben werden.

Gemäß einer besonders vorteilhaften Ausführungsform der Erfindung enthält die Kautschukmischung das Silan gemäß Formel IV).
Gemäß einer besonders vorteilhaften Ausführungsform der Erfindung enthält die Kautschukmischung das Silan gemäß Formel V).

Bei der erfindungsgemäßen Kautschukmischung handelt es sich bevorzugt um eine Kautschukmischung, die für den Einsatz in Fahrzeugreifen geeignet ist und hierzu bevorzugt wenigstens einen Dienkautschuk enthält.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.
Der Dienkautschuk ist dabei ausgewählt aus der Gruppe bestehend aus natürlichem Polyisopren und/oder synthetischem Polyisopren und/oder epoxidiertem Polyisopren und/oder Butadien-Kautschuk und/oder Butadien-Isopren-Kautschuk und/oder lösungspolymerisiertem Styrol-Butadien-Kautschuk und/oder emulsionspolymerisiertem Styrol-Butadien-Kautschuk und/oder Styrol-Isopren-Kautschuk und/oder Flüssigkautschuken mit einem Molekulargewicht M_{w} von größer als 20000 g/mol und/oder Halobutyl-Kautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder Acrylat-Kautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydriertem AcrylnitrilbutadienKautschuk und/oder hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz.

Vorzugsweise ist der Dienkautschuk ausgewählt aus der Gruppe, bestehend aus natürlichem Polyisopren und/oder synthetischem Polyisopren und/oder Butadien-Kautschuk und/oder lösungspolymerisiertem Styrol-Butadien-Kautschuk und/oder emulsionspolymerisiertem Styrol-Butadien-Kautschuk.

Gemäß einer bevorzugten Weiterbildung der Erfindung werden in der Kautschukmischung wenigstens zwei verschiedene Dienkautschuk-Typen eingesetzt.

Die erfindungsgemäße Kautschukmischung enthält als Füllstoff bevorzugt wenigstens eine Kieselsäure, wodurch die Vorteile des erfindungsgemäßen Silans besonders hervortreten. Die Begriffe "Kieselsäure" und Silika" werden im Rahmen der vorliegenden Erfindung synonym verwendet.
Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 m²/g, bevorzugt von 35 bis 350 m²/g, besonders bevorzugt von 100 bis 320 m²/g und ganz besonders bevorzugt von 100 bis 235 m²/g, und eine CTAB-Oberfläche (gemäß ASTM D 3765) von 30 bis 400 m²/g, bevorzugt von 30 bis 330 m²/g, besonders bevorzugt von 95 bis 300 m²/g und ganz besonders bevorzugt von 95 bis 200 m²/g, aufweist. Derartige Kieselsäuren führen z. B. in Kautschukmischungen für innere Reifenbauteile zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch Kieselsäuren mit einer vergleichsweise niedrigen BET-Oberfläche (wie z. B. Zeosil® 1115 oder Zeosil® 1085 der Firma Solvay) als auch hoch dispergierbare Kieselsäuren, so genannte HD-Kieselsäuren (z. B. Zeosil® 1165 MP der Firma Solvay).

Die Menge der wenigstens einen Kieselsäure beträgt dabei bevorzugt 5 bis 300 phr, besonders bevorzugt 10 bis 200 phr, ganz besonders bevorzugt 20 bis 180 phr. Im Falle unterschiedlicher Kieselsäuren ist mit den angegebenen Mengen die Gesamtmenge an enthaltenen Kieselsäuren gemeint.

Die in dieser Schrift verwendete Angabe phr (parts per hundred parts of rubber by weight) ist die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen (Mw größer als 50.000 g/mol) und dadurch festen Kautschuke bezogen.
Die in dieser Schrift verwendete Angabe phf (parts per hundred parts of filler by weight) ist die in der Kautschukindustrie gebräuchliche Mengenangabe für Kupplungsagenzien für Füllstoffe. Im Rahmen der vorliegenden Anmeldung bezieht sich phf auf die vorhandene Kieselsäure, das heißt, dass andere eventuell vorhandene Füllstoffe wie Ruß nicht in die Berechnung der Silanmenge mit eingehen.

Bevorzugt enthält die erfindungsgemäße Kautschukmischung wenigstens ein Silan der Formel I), bevorzugt wenigstens das Silan gemäß Formel IV) und/oder Formel V) in einer Menge von 1 bis 25 phr und im bevorzugten Fall mit Kieselsäure als Füllstoff bevorzugt 2 bis 20 phf.

Das oder die erfindungsgemäßen Silane werden bei der Herstellung der erfindungsgemäßen Kautschukmischung bevorzugt in wenigstens einer Grundmischstufe zugegeben, die bevorzugt wenigstens einen Dienkautschuk und bevorzugt wenigstens eine Kieselsäure als Füllstoff enthält.
Ein weiterer Gegenstand der vorliegenden Erfindung ist somit ein Verfahren zur Herstellung der erfindungsgemäßen Kautschukmischung, wobei wenigstens ein erfindungsgemäßes Silan wie vorstehend beschrieben bevorzugt in wenigstens einer Grundmischstufe zugegeben wird.
Gemäß einer vorteilhaften Ausführungsform der Erfindung wird das wenigstens eine erfindungsgemäße Silan zuvor auf Kieselsäure aufgezogen und in dieser Form in die Kautschukmischung eingemischt.
Bei dem erfindungsgemäßen Verfahren zur Herstellung der erfindungsgemäßen Kautschukmischung ist es somit bevorzugt, wenn das wenigstens eine erfindungsgemäße Silan zuvor auf Kieselsäure aufgezogen und in dieser Form in die Kautschukmischung eingemischt wird.
Die so erhaltene Kautschukgrundmischung enthaltend wenigstens ein erfindungsgemäßes Silan wird anschließend durch Zugabe von Vulkanisationschemikalien, s. unten insbesondere ein Schwefelvulkanisationssystem, zu einer Kautschukfertigmischung verarbeitet und im Anschluss vulkanisiert, wodurch ein erfindungsgemäßes Vulkanisat der erfindungsgemäßen Kautschukmischung erhalten wird.

Die erfindungsgemäße Kautschukmischung kann Ruß als weiteren Füllstoff enthalten, und zwar bevorzugt in Mengen von 2 bis 200 phr, besonders bevorzugt 2 bis 70 phr.

Weitere ggf. verstärkende Füllstoffe sind z.B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filler".

Die erfindungsgemäße Kautschukmischung kann weitere Füllstoffe enthalten.
Die Menge an weiteren Füllstoffen beträgt gemäß einer Ausführungsform der Erfindung 0,1 bis 3 phr.
Gemäß einer weiteren Ausführungsform beträgt die Menge an weiteren Füllstoffen 0 phr. Gemäß einer weiteren Ausführungsform der Erfindung beträgt die Menge an weiteren Füllstoffen 0,1 bis 50 phr, bevorzugt 0,1 bis 30 phr, besonders bevorzugt 0,1 bis 10 phr.

Zu den weiteren (nicht verstärkenden) Füllstoffen zählen im Rahmen der vorliegenden Erfindung Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).
Zinkoxid gehört im Rahmen der vorliegenden Erfindung nicht zu den Füllstoffen.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) und/oder sonstige Aktivatoren, wie Zinkkomplexe wie z.B. Zinkethylhexanoat,
c) Ozonschutzwachse,
d) Harze, insbesondere Klebharze für innere Reifenbauteile, die nicht den oben bevorzugt genannten Kohlenwasserstoffharzen entsprechen,
e) Mastikationshilfsmittel, wie z. B. 2,2'-Dibenzamidodiphenyldisulfid (DBD) und
f) Prozesshilfsmittel, wie insbesondere Fettsäureester und Metallseifen, wie z.B. Zinkseifen und/oder Calciumseifen
g) Weichmacher, wie insbesondere wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Flüssig-Polymere, deren mittleres Molekulargewicht (Bestimmung per GPC = gel permeation chromatography, in Anlehnung an BS ISO 11344:2004) zwischen 500 und 20000 g/mol liegt, wobei Mineralöle als Weichmacher besonders bevorzugt sind. Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Der Mengenanteil der Gesamtmenge an weiteren Zusatzstoffen beträgt 3 bis 150 phr, bevorzugt 3 bis 100 phr und besonders bevorzugt 5 bis 80 phr.
Im Gesamtmengenanteil der weiteren Zusatzstoffe kann Zinkoxid (ZnO) in den oben genannten Mengen enthalten sein. Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.

Die Vulkanisation der erfindungsgemäßen Kautschukmischung wird bevorzugt in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern. Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS) oder eines Guanidin-Beschleunigers wie Diphenylguanidin (DPG).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.
DipDis (Bis-(Diisopropyl)thiophosphoryldisulfid) und/oder Bis(O,O-2-ethylhexylthiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.
Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger. Besonders bevorzugt ist die Verwendung der Beschleuniger TBBS und/oder CBS und/oder Diphenylguanidin (DPG).
Außerdem können in der Kautschukmischung Vulkanisationsverzögerer vorhanden sein.

Die Begriffe "vulkanisiert" und "vernetzt" werden im Rahmen der vorliegenden Erfindung synonym verwendet.

Gemäß einer bevorzugten Weiterbildung der Erfindung werden bei der Herstellung der schwefelvernetzbaren Kautschukmischung mehrere Beschleuniger in der Fertigmischstufe zugegeben.
Die Herstellung der erfindungsgemäßen schwefelvernetzbaren Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang oder Kalandrieren weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die oben beschriebene erfindungsgemäße Kautschukmischung ist besonders für die Verwendung in Fahrzeugreifen, insbesondere Fahrzeugluftreifen geeignet. Hierbei ist die Anwendung in allen Reifenbauteilen prinzipiell denkbar, insbesondere in einem Laufstreifen, insbesondere in der Cap eines Laufstreifens mit Cap/Base-Konstruktion. Die Cap ist hierbei der Teil des Laufstreifens des Fahrzeugreifens, der mit der Fahrbahn in Berührung kommt, während die Base der radial darunter befindliche innere Teil des Laufstreifens ist, der nicht mit der Fahrbahn in Berührung kommt.
Zur Verwendung in Fahrzeugreifen wird die Mischung als Fertigmischung vor der Vulkanisation bevorzugt in die Form eines Laufstreifens gebracht und bei der Herstellung des Fahrzeugreifenrohlings wie bekannt aufgebracht. Die Herstellung der erfindungsgemäßen Kautschukmischung zur Verwendung als Seitenwand oder sonstige Body- Mischung in Fahrzeugreifen erfolgt wie bereits beschrieben. Der Unterschied liegt in der Formgebung nach dem Extrusionsvorgang bzw. dem Kalandrieren der Mischung. Die so erhaltenen Formen der noch unvulkanisierten Kautschukmischung für eine oder mehrere unterschiedliche Body-Mischungen dienen dann dem Aufbau eines Reifenrohlings. Als Body-Mischung werden hierbei die Kautschukmischungen für die inneren Bauteile eines Reifen, wie im Wesentlichen Squeegee, Innenseele (Innenschicht), Kernprofil, Gürtel, Schulter, Gürtelprofil, Karkasse, Wulstverstärker, Wulstprofil, Hornprofil und Bandage. Der noch unvulkanisierte Reifenrohling wird anschließend vulkanisiert.
Zur Verwendung der erfindungsgemäßen Kautschukmischung in Riemen und Gurten, insbesondere in Fördergurten, wird die extrudierte noch unvulkanisierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Ein weiterer Gegenstand der vorliegenden Erfindung ist ein Fahrzeugreifen, der die erfindungsgemäße Kautschukmischung enthaltend wenigstens ein erfindungsgemäßes Silan in wenigstens einem Bauteil aufweist.
Der vulkanisierte Fahrzeugreifen weist wenigstens in einem Bauteil ein Vulkanisat wenigstens einer erfindungsgemäßen Kautschukmischung auf. Dem Fachmann ist bekannt, dass die meisten Substanzen, wie z. B. die enthaltenen Kautschuke und Silane, insbesondere das erfindungsgemäße Silan, entweder bereits nach dem Mischen oder erst nach der Vulkanisation in chemisch veränderter Form vorliegen.
Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Bevorzugt weist der erfindungsgemäße Fahrzeugreifen die erfindungsgemäße Kautschukmischung wenigstens im Laufstreifen auf. Bevorzugt weist der erfindungsgemäße Fahrzeugreifen die erfindungsgemäße Kautschukmischung wenigstens in der Seitenwand auf. Die erfindungsgemäße Kautschukmischung ist ferner auch für andere Bauteile von Fahrzeugreifen geeignet, wie z. B. insbesondere dem, Hornprofil, sowie innere Reifenbauteile. Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet.

Im Folgenden soll die Erfindung anhand von Ausführungsbeispielen näher erläutert werden.
Das Silan gemäß Formel IV) als erfindungsgemäßes Beispiel wurde auf folgende Weise hergestellt:

### 1. Herstellung von Bis-(4-carboxyphenyl)-disulfid nach dem Syntheseschema gemäß Formel VI)

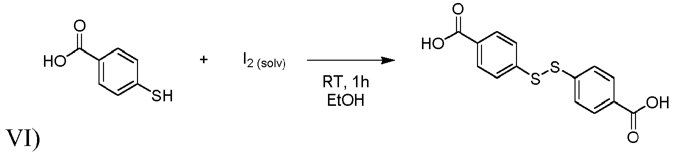

Zu einer Lösung von 4-Mercaptobenzoesäure (7.50 g, 48.6 mmol, 1.0 Äq.) in Ethanol (500 mL, EtOH) wurde bei Raumtemperatur tropfenweise eine gesättigte, ethanolische Iodlösung (insgesamt 25 mL) gegeben. Bei der Zugabe entfärbte sich die Iodlösung und die Reaktionsmischung trübte sich ein. Die Zugabe von Iod wurde solange fortgesetzt, bis die entstandene Suspension aufgrund des überschüssigen Iods eine blass gelbe Farbe annahm.

Anschließend wurde die Reaktionsmischung mittels Büchnertrichter filtriert und der Rückstand wurde mit kaltem demineralisiertem Wasser (4 x 50 mL) und kaltem Ethanol (4 x 50 mL) gewaschen, um das überschüssige Iod zu entfernen.

Nach Trocknen im Hochvakuum konnte die Zielverbindung in Form eines weißen Pulvers (6.69 g, 21.8 mmol, 90%) isoliert werden.
¹H NMR (500 MHz, DMSO-*d₆*; Dimethylsulfoxid) δ 13.08 (s, 2H), 7.97 - 7.88 (m, 4H), 7.67 - 7.59 (m, 4H).
¹³C NMR (126 MHz, DMSO-*d₆*) δ 167.22, 141.16, 130.83, 130.31, 126.54.

### 2. Herstellung von 1-(4'-Aminophenyl)-3-(3"-(triethoxysilyl)propyl)-harnstoff nach dem Syntheseschema gemäß Formel VII)

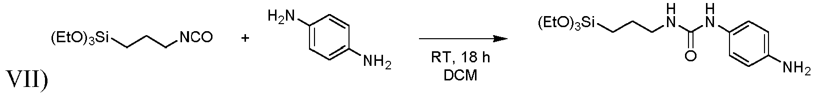

Zu einer Lösung von *para*-Phenylendiamin (10.00 g, 92.5 mmol, 2.0 Äq.) in Dichlormethan (300 mL DCM) wurde bei Raumtemperatur tropfenweise 3-(Isocyanatopropyl)-triethoxysilan (11.44 mL, 11.44 g, 46.2 mmol, 1.0 Äq.) gegeben. Nach Rühren über Nacht wurde das Lösungsmittel am Rotationsverdampfer entfernt und es konnte ein grauer Feststoff (21.57 g) als Rohprodukt erhalten werden.

Die säulenchromatographische Aufreinigung erfolgte in mehreren kleinen Portionen zu je ca. 3 - 4 g (jeweils ca. 74 w% Ausbeute) an Kieselgel (DCM/EtOH 9:1).

Nach dem Trocknen am Hochvakuum konnte die Zielverbindung in Form eines leicht grauen Feststoffes (extrapoliert für gesamtes Produkt: 15.96 g, 44.9 mmol, 97% bezogen auf Silan) isoliert werden.
¹H NMR (500 MHz, DMSO-*d₆*) δ 7.82 (s, 1H), 6.98 (d, *J* = 8.7 Hz, 2H), 6.45 (d, *J* = 8.7 Hz, 2H), 5.91 (t, *J* = 5.8 Hz, 1H), 4.66 (s, 2H), 3.74 (q, *J* = 7.0 Hz, 6H), 3.00 (q, *J* = 6.8 Hz, 2H), 1.48 - 1.39 (m, 2H), 1.14 (t, *J* = 7.0 Hz, 9H), 0.57 - 0.49 (m, 2H).
¹³C NMR (126 MHz, DMSO-*d₆*) δ 155.69, 143.33, 129.62, 120.22, 114.12,57.70,41.81, 23.49, 18.24, 7.25.

### 3. Herstellung von Bis-(4-carboxylchloridophenyl)-disulfid (in situ) nach dem Syntheseschema gemäß Formel VIII)

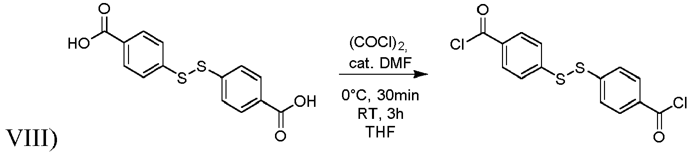

Zu einer Suspension von Bis-(4-carboxyphenyl)-disulfid (1.96 g, 6.4 mmol, 1.0 Äq.) in Tetrahydrofuran (60 mL THF) wurde Dimethylformamid (0.1 mL DMF, cat.) gegeben. Bei 0 °C wurde Oxalylchlorid (5.49 mL, 8.12 g, 64.0 mmol, 10.0 Äq.) tropfenweise zu der Reaktionsmischung gegeben und für 30 min bei der Temperatur gerührt. Anschließend wurde die entstandene gelbe Lösung für weitere 3 h bei RT gerührt. Danach wurden das Lösungsmittel und überschüssiges Oxalylchlorid abdestilliert. Es konnte ein gelber Feststoff isoliert werden, der ohne weitere Analytik oder Aufreinigung (aufgrund der Reaktivität) für den nächsten Syntheseschritt verwendet wurde.

### 4. Herstellung des Silans gemäß Formel II) nach dem Syntheseschema gemäß Formel IX)

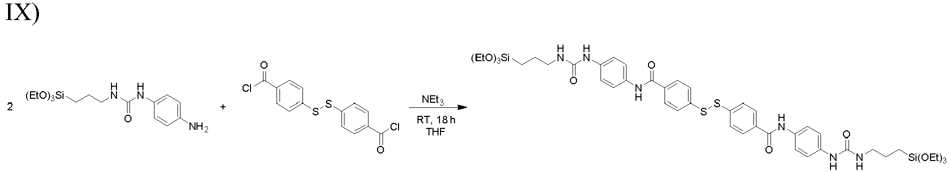

Zu einer Lösung von 1-(4-aminophenyl)-3-(3-(triethoxysilyl)propyl)-harnstoff (2.55 g, 7.17 mmol, 2.2 Äq.) und Triethylamin (2.11 mL, 1.65 g, 16.3 mmol, 5.0 Äq.) in THF (10 mL) wurde bei RT eine Lösung von Bis-(4-carboxylchloridophenyl)-disulfid (1.12 g, 3.26 mmol, 1.0 Äq.) in THF (40 mL) über einen Zeitraum von 15 min. getropft. Die entstandene blass gelbe Suspension wurde anschließend über Nacht gerührt und danach abfiltriert. Der Filterkuchen wurde mit kaltem THF (2 x 10 mL) gewaschen. Nach Trocknen im Hochvakuum konnte die Zielverbindung in Form eines weißen Pulvers (2.39 g, 2.44 mmol, 75 %) isoliert werden.
¹H NMR (500 MHz, DMSO-*d₆*) δ 10.13 (s, 2H), 8.45 (s, 2H), 7.94 (d, *J* = 8.5 Hz, 4H), 7.67 (d, *J* = 8.6 Hz, 4H), 7.56 (d, *J* = 9.0 Hz, 4H), 7.34 (d, *J* = 9.0 Hz, 4H), 6.23 (t, *J* = 5.8 Hz, 2H), 3.74 (q, *J* = 7.0 Hz, 12H), 3.03 (q, *J* = 6.6 Hz, 4H), 1.52 - 1.41 (m, 4H), 1.14 (t, *J* = 7.0 Hz, 18H), 0.60 - 0.51 (m, 4H).
¹³C NMR (126 MHz, DMSO-*d₆*) δ 164.32, 155.34, 139.05, 136.78, 134.16, 132.49, 128.75, 126.38, 121.10, 117.79, 57.80, 56.12, 41.84, 23.45, 18.31, 7.32.
²⁹Si NMR (99 MHz, DMSO-*d₆*) δ -44.52.

Die Herstellung des Silans V) als weiteres erfindungsgemäßes Beispiel, also des bezüglich der disulfidischen Gruppe ortho-verknüpften Silans, erfolgt prinzipiell analog zur Herstellung des Silans IV). Im Folgenden werden daher nur die Unterschiede beschrieben. Die Synthese geht von dem kommerziell erhältlichen Bis-(2-carboxyphenyl)-disulfid aus, welches gemäß Schema X) mittels Oxalylchorid zu Bis-(2-carboxylchloridophenyl)-disulfid umgesetzt wird: 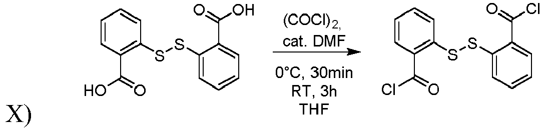 Zu einer Suspension von Bis-(2-carboxyphenyl)-disulfid (2.94 g, 9.6 mmol, 1.0 Äq.) in THF (60 mL) wurde DMF (0.15 mL, cat.) gegeben. Bei 0 °C wurde Oxalylchlorid (8.23 mL, 12.19 g, 96.0 mmol, 10.0 Äq.) tropfenweise zu der Reaktionsmischung gegeben und für 30 min bei der Temperatur gerührt. Anschließend wurde die entstandene gelbe Lösung für weitere 3 h bei RT gerührt. Danach wurden das Lösungsmittel und überschüssiges Oxalylchlorid abdestilliert.

Es konnte ein gelber Feststoff isoliert werden, der ohne weitere Analytik oder Aufreinigung (aufgrund der Reaktivität) für den nächsten Syntheseschritt verwendet wurde.

Anschließend erfolgt gemäß Syntheseschema XI) die Umsetzung mit 1-(4-aminophenyl)-3-(3-(triethoxysilyl)propyl)-harnstoff, welches wie oben beschrieben hergestellt wird.

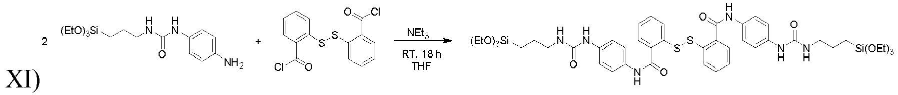

Zu einer Lösung von 1-(4-aminophenyl)-3-(3-(triethoxysilyl)propyl)-harnstoff (7.51 g, 21.1 mmol, 2.2 Äq.) und Triethylamin (6.65 mL, 4.86 g, 48.0 mmol, 5.0 Äq.) in THF (30 mL) wurde bei RT eine Lösung von Bis-(2-carboxylchloridophenyl)-disulfid (3.30 g, 9.6 mmol, 1.0 Äq.) in THF (80 mL) über einen Zeitraum von 15 min. getropft. Die entstandene blass gelbe Suspension wurde anschließend über Nacht gerührt und danach abfiltriert. Das Filtrat wurde eingeengt und der erneut ausgefallene Feststoff wurde erneut abfiltriert. Der Filterkuchen wurde mit kaltem THF (2 x 25 mL) und dem. Wasser (2 x 25 mL) gewaschen.
Nach Trocknen im Hochvakuum konnte die Zielverbindung in Form eines weißen Pulvers (2.70 g, 2.75 mmol, 29 %) isoliert werden.
¹H NMR (500 MHz, DMSO-*d₆*) δ 10.41 (s, 2H), 8.39 (s, 2H), 7.76 (d, *J=* 7.6 Hz, 1H), 7.72 (d, *J* = 8.1 Hz, 1H), 7.60 (d, *J* = 9.0 Hz, 3H), 7.50 (ddd, *J* = 8.5, 7.4, 1.5 Hz, 2H), 7.40 - 7.34 (m, 6H), 6.14 (t, *J=* 5.7 Hz, 2H), 3.75 (q, *J=* 7.0 Hz, 12H), 3.05 (q, *J=* 6.6 Hz, 4H), 1.54 - 1.42 (m, 4H), 1.15 (t, *J* = 7.0 Hz, 18H), 0.63 - 0.51 (m, 4H).
¹³C NMR (126 MHz, DMSO-*d₆*) δ 165.20, 155.21, 136.85, 136.49, 134.67, 132.32, 131.30, 128.37, 126.25, 126.09, 120.76, 117.77, 57.73, 41.77, 23.39, 18.25, 7.27.
²⁹Si NMR (99 MHz, DMSO-*d₆*) δ -44.57.

Das hergestellte Silan gemäß Formel IV) und/oder V) wird in eine erfindungsgemäße Kautschukmischung enthaltend wenigstens einen Dienkautschuk und wenigstens eine Kieselsäure als Füllstoff eingemischt. Bevorzugt wird das Silan gemäß Formel IV) und/oder V) hierzu zuvor auf eine Kieselsäure aufgezogen und anschließend in dieser Form der Kautschukmischung zugegeben.

Das Aufziehen auf Kieselsäure erfolgt z. B. folgendermaßen:
Zu einer Suspension von Kieselsäure, z. B. granulierter Kieselsäure, in DMF wird bei Raumtemperatur eine Lösung des Silans gemäß Formel IV) und/oder V) in dem gewünschten Verhältnis Kieselsäure / Silan gelöst in DMF gegeben. Beispielsweise werden 31,2 g Kieselsäure (VN3, Firma Evonik) und 4,62 g des Silans gemäß Formel IV) und/oder V) verwendet. Die entstehende Suspension wird über Nacht bei 120 °C gerührt und anschließend wird das Lösungsmittel unter vermindertem Druck entfernt. Nach einem Tag Trocknen am Hochvakuum bei 40 °C wird die so erhaltene modifizierte Kieselsäure mittels Mörser zerkleinert. Anschließend wird einen weiteren Tag bei 40 °C am Hochvakuum getrocknet.

Die erfindungsgemäße Kautschukmischung wird beispielsweise in Form eines vorgeformten Laufstreifens eines Fahrzeugreifens (wie oben beschrieben) auf einen Reifenrohling aufgebracht und anschließend mit diesem vulkanisiert.

Im Folgenden werden beispielhafte erfindungsgemäße Kautschukmischungen enthaltend die Silane gemäß Formel IV) oder V) beschrieben und mit Kautschukmischungen enthaltend ein aus dem Stand der Technik bekanntes Silan verglichen. Die Zusammensetzungen und Ergebnisse sind in Tabelle 1 zusammengefasst. Die Vergleichsmischungen sind mit V, die erfindungsgemäßen Mischungen sind mit E gekennzeichnet. Die Mischungen V1 und E1 sowie V2 und E2 sowie V3 und E3 und E4 enthalten dabei jeweils molgleiche Mengen des Silans aus dem Stand der Technik (V1, V2, V3) bzw. des erfindungsgemäßen Silans IV) (E1, E2, E3) bzw. des erfindungsgemäßen Silans V) (E4).

Die Silane sind jeweils auf die Kieselsäure (95 phr in jeder Mischung) aufgezogen, sodass die jeweils Silan-modifizierte Kieselsäure eingemischt wurde. Die Mengenangaben beziehen sich damit auf die Produkte der Modifizierungsreaktionen, wobei in jeder Mischung 95 phr Kieselsäure eingesetzt wurden. Die Restmenge (Differenz: Tabellenwert minus 95 phr) stellt somit an die Kieselsäure angebundenes Silan dar.

Die Mischungsherstellung erfolgte ansonsten nach dem in der
Kautschukindustrie üblichen Verfahren unter üblichen Bedingungen in zwei Stufen in einem Labormischer mit 80 Milliliter bis 3 Liter Volumen, bei dem zunächst in der ersten Mischstufe (Grundmischstufe) alle Bestandteile außer dem Vulkanisationssystem (Schwefel und vulkanisationsbeeinflussende Substanzen) für 200 bis 600 Sekunden bei 145 bis 165 °C, Zieltemperaturen von 152 bis 157 °C, vermischt wurden. Durch Zugabe des Vulkanisationssystems in der zweiten Stufe (Fertigmischstufe) wurde die Fertigmischung erzeugt, wobei für 180 bis 300 Sekunden bei 90 bis 120 °C gemischt wurde.
Aus sämtlichen Mischungen wurden Prüfkörper durch Vulkanisation nach t₉₅ (gemessen am Moving Disc Rheometer gemäß ASTM D 5289-12/ ISO 6502) unter Druck bei 160°C hergestellt und mit diesen Prüfkörpern für die Kautschukindustrie typische Materialeigenschaften mit den im Folgenden angegebenen Testverfahren ermittelt.
- Shore-A-Härte (Sh A) bei Raumtemperatur gemäß ISO 868
- Rückprallelastizität bei Raumtemperatur gemäß ISO 4662
- dynamischer Speichermodul E' bei 55 °C gemäß DIN 53 513 bei 0,15 % und 6 % Dehnung
- Spannungswert bei 50%, 100%, 200%, 300% und 400% Dehnung bei Raumtemperatur gemäß ISO 37, Prüfkörper Schulterstab Typ 3

### Verwendete Substanzen:

a) Kieselsäure: Ultrasil® VN3, Fa. Evonik, jeweils 95 phr, Restmenge jeweils angebundenes Silan
b) TESPD (3,3'-Bis(triethoxysilylpropyl)disulfid)
c) Erfindungsgemäßes Silan gemäß Formel IV), hergestellt wie vorstehend beschrieben
d) Erfindungsgemäßes Silan gemäß Formel V), hergestellt wie vorstehend beschrieben
e) Alterungsschutzmittel, Ozonschutzwachs, Zinkoxid, Stearinsäure
f) DPG und CBS

Wie in Tabelle 1 erkennbar, liegen die Kautschukmischungen E1 bis E4 auf einem höheren Steifigkeitsniveau und weisen eine höhere Härte auf. Die erfindungsgemäßen Ausführungsbeispiele, also die Mischungen mit den erfindungsgemäß hergestellten Silanen zeigen somit insbesondere verbesserte Handling-Indikatoren.

Die erfindungsgemäßen Beispiele E1 bis E3 enthaltend das Silan gemäß Formel IV) weisen zudem mit den (im Vergleich zu V1 bis V3) geringeren Rückprallelastizitäten verbesserte Nassbrems-Indikatoren auf.

**Tabelle 1**

| **Bestandteile** | **Einheit** | **V1** | **V2** | **V3** | **E1** | **E2** | **E3** | **E4** |
|---|---|---|---|---|---|---|---|---|
| NR | phr | 20 | 20 | 20 | 20 | 20 | 20 | 20 |
| SSBR | phr | 80 | 80 | 80 | 80 | 80 | 80 | 80 |
| TDAE | phr | 35 | 35 | 35 | 35 | 35 | 35 | 35 |
| Kieselsäure ^{a)} + TESPD ^{b)} | phr | 98,4 | 99,4 | 100,5 | - | - | - | - |
| Kieselsäure ^{a)} + Silan IV) ^{c}) | phr | - | - | - | 102,7 | 105,2 | 107,8 | - |
| Kieselsäure ^{a)} + Silan V) ^{d)} | phr | - | - | - | - | - | - | 107,8 |
| Sonstige Zusatzstoffe ^{e)} | phr | 9 | 9 | 9 | 9 | 9 | 9 | 9 |
| Beschleuniger ^{f)} | phr | 3,6 | 3,6 | 3,6 | 3,6 | 3,6 | 3,6 | 3,6 |
| Schwefel | phr | 2 | 2 | 2 | 2 | 2 | 2 | 2 |
| | | | | | | | | |

| **Eigenschaften** | | | | | | | | |
|---|---|---|---|---|---|---|---|---|
| S50 | MPa | 1,1 | 1,2 | 1,2 | 1,4 | 1,5 | 1,9 | 1,8 |
| S100 | MPa | 1,9 | 1,9 | 2,0 | 2,3 | 2,6 | 3,1 | 3,0 |
| S200 | MPa | 3,9 | 4,0 | 4,2 | 4,7 | 5,8 | 6,3 | 6,1 |
| S300 | MPa | 6,3 | 6,6 | 7,0 | 7,6 | 9,6 | 10,1 | 9,7 |
| S400 | MPa | 9,0 | 9,2 | 9,9 | 10,8 | 13,4 | 13,8 | 13,3 |
| E' (6%) | MPa | 8,5 | 9,5 | 8,3 | 10,1 | 10,5 | 11,6 | 10,9 |
| E' (0,15 %) | MPa | 17,0 | 18,7 | 16,0 | 21,5 | 21,6 | 24,9 | 29,8 |
| Härte RT | ShA | 71,4 | 71,9 | 71,5 | 75 | 77,9 | 79 | 79,7 |
| Rückpr. RT | % | 17,4 | 17,4 | 18 | 15,8 | 16,6 | 15,8 | 25,4 |

## Patentansprüche

1. Silan gemäß Formel I):
I) (R¹)ₒSi-R²-X-A-Y-[A-Y-]ₘ-A-Sₖ-A-[-Y-A]ₘ-Y-A-X-R²-Si(R¹)ₒ
wobei o = 1, 2 oder 3 sein kann und k eine ganze Zahl größer oder gleich 2 ist und die Reste R¹ innerhalb der Silylgruppen (R¹)ₒSi- und auf beiden Seiten des Moleküls gleich oder verschieden voneinander sein können und ausgewählt sind aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen, Arylgruppen mit 6 bis 20 Kohlenstoffatomen, Alkylgruppen mit 1 bis 10 Kohlenstoffatomen, Alkenylgruppen mit 2 bis 20 Kohlenstoffatomen, Alkinylgruppen mit 2 bis 20 Kohlenstoffatomen, Aralkylgruppen mit 7 bis 20 Kohlenstoffatomen, Halogeniden oder
Alkylpolyethergruppen -O-(R⁶-O)ᵣ-R^{S} wobei R⁶ gleich oder verschieden sind und verzweigte oder unverzweigte, gesättigte oder ungesättigte, aliphatische, aromatische oder gemischt aliphatisch/aromatische zweibindige C₁-C₃₀-Kohlenwasserstoffgruppen sind, vorzugsweise -CH₂-CH₂-, r eine ganze Zahl von 1 bis 30, vorzugsweise 3 bis 10 ist, und R⁵ unsubstituierte oder substituierte, verzweigte oder unverzweigte, einbindige Alkyl-, Alkenyl-, Aryl- oder Aralkylgruppen, vorzugsweise -C₁₃H₂₇ Alkyl-Gruppe sind
oder
zwei R¹ bilden eine cyclische Dialkoxygruppe mit 2 bis 10 Kohlenstoffatomen wobei dann o < 3 ist,
oder es können zwei oder mehr Silane gemäß Formel I) über Reste R¹ verbrückt sein; und
wobei die Reste R² innerhalb eines Moleküls gleich oder verschieden sein können und lineare oder verzweigte Alkylgruppen mit 1 bis 20 Kohlenstoffatomen oder Cycloalkylgruppen mit 4 bis 12 Kohlenstoffatomen oder Arylgruppen mit 6 bis 20 Kohlenstoffatomen oder Alkenylgruppen mit 2 bis 20 Kohlenstoffatomen,
Alkinylgruppen mit 2 bis 20 Kohlenstoffatomen oder Aralkylgruppen mit 7 bis 20 Kohlenstoffatomen sind; und
wobei die Gruppen X innerhalb eines Moleküls gleich oder verschieden voneinander sein können und ausgewählt sind aus den Gruppen -HNC(=O)-, -C(=O)NH-, -C(=O)O-, -OC(=O)-, -OC(=O)NH-, -HNC(=O)O-, -R³NC(=O)NR³⁻, -R³NC(=NR³)NR³-, -R³NC(=S)NR³-, wobei die Reste R³ innerhalb einer Gruppe X und eines Moleküls gleich oder verschieden sein können und ausgewählt sind aus einem Wasserstoffatom oder wie für R² definiert unter der Bedingung, dass wenigstens ein R³ innerhalb einer jeden Gruppe X ein Wasserstoffatom ist; und
wobei die Gruppen A innerhalb eines Moleküls gleich oder verschieden voneinander sein können und aromatische Gruppen sind, und
wobei die Gruppen Y innerhalb eines Moleküls gleich oder verschieden voneinander sein können und ausgewählt sind aus den Gruppen -HNC(=O)-, -C(=O)NH-, -C(=O)O-, -OC(=O)-, -OC(=O)NH-, -HNC(=O)O-, -R⁴NC(=O)NR⁴-, -R⁴NC(=NR⁴)NR⁴-, -R⁴NC(=S)NR⁴-, wobei die Reste R⁴ innerhalb einer Gruppe Y und eines Moleküls gleich oder verschieden sein können und ausgewählt sind aus einem Wasserstoffatom oder wie für R² definiert unter der Bedingung, dass wenigstens ein R⁴ innerhalb einer jeden Gruppe Y ein Wasserstoffatom ist; und wobei jedes m unabhängig voneinander eine ganze Zahl von 0 bis 4 ist, und wobei das Silan auch in Form von Oligomeren vorliegen kann, die durch Hydrolyse und Kondensation von Silanen der Formel I) entstehen.

2. Silan nach Anspruch 1, **dadurch gekennzeichnet, dass** jedes m = 0 ist.

3. Silan nach einem der vorherigen Ansprüche, **dadurch gekennzeichnet, dass** die Gruppen X ausgewählt sind aus den Gruppen
-HNC(=O)-, -C(=O)NH-, -OC(=O)NH-, -HNC(=O)O-, -R³NC(=O)NR³-, -R³NC(=NR³)NR³-, -R³NC(=S)NR³-.

4. Silan nach einem der vorherigen Ansprüche, **dadurch gekennzeichnet, dass** die Gruppen Y ausgewählt sind aus den Gruppen
-HNC(=O)-, -C(=O)NH-, -OC(=O)NH-, -HNC(=O)O-, -R⁴NC(=O)NR⁴-, -R⁴NC(=NR⁴)NR⁴-, -R⁴NC(=S)NR⁴-.

5. Silan nach einem der vorherigen Ansprüche, **dadurch gekennzeichnet, dass** die aromatischen Gruppen A ausgewählt sind aus der Gruppe bestehend aus Phenyl-, Naphthyl-, Pyridyl-, Pyridazyl-, Pyrimidyl-, Pyrazyl-, Triazyl-, Chinolyl-, Pyrrol, Furan-, Thiophen-, Pyrazol-, Imidazol-, Thiazol- und Oxazol-Resten.

6. Silan nach einem der vorherigen Ansprüche **dadurch gekennzeichnet, dass** die Reste R¹ Alkylgruppen mit 1 bis 6 Kohlenstoffatomen oder Alkoxygruppen mit 1 bis 6 Kohlenstoffatomen oder Halogenide sind.

7. Silan nach einem der vorherigen Ansprüche **dadurch gekennzeichnet, dass** die Reste R² lineare oder verzweigte Alkylgruppen mit 2 bis 8 Kohlenstoffatomen oder Cycloalkylgruppen mit 4 bis 8 Kohlenstoffatomen sind.

8. Silan nach Anspruch 1, **dadurch gekennzeichnet, dass** es die folgende Formel II) aufweist:

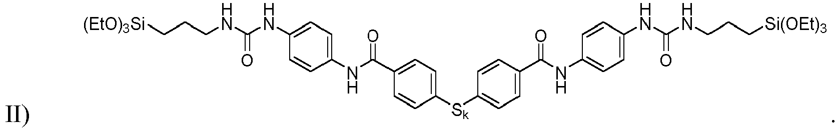

9. Silan nach Anspruch 1, **dadurch gekennzeichnet, dass** es die folgende Formel III) aufweist:

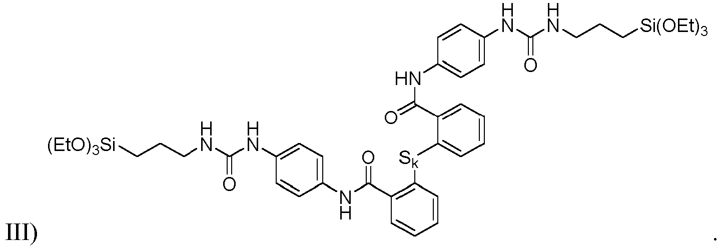

10. Silan nach einem der vorherigen Ansprüche, wobei k eine ganze Zahl von 2 bis 8 ist.

11. Kautschukmischung enthaltend wenigstens ein Silan nach einem der Ansprüche 1 bis 10.

12. Fahrzeugreifen, der die Kautschukmischung nach Anspruch 11 in wenigstens einem Bauteil aufweist.

## Claims

1. Silane of formula I):
I) (R¹)ₒSi-R²X-A-Y-[A-Y-]ₘ-A-Sₖ-A-[-Y-A]ₘ-Y-A-X-R²-Si(R¹)ₒ
wherein o may be 1, 2 or 3 and k is an integer greater than or equal to 2 and the radicals R¹ within the silyl groups (R¹)ₒSi- and on both sides of the molecule may be identical or different from each other and are selected from alkoxy groups having 1 to 10 carbon atoms, cycloalkoxy groups having 4 to 10 carbon atoms, phenoxy groups having 6 to 20 carbon atoms, aryl groups having 6 to 20 carbon atoms, alkyl groups having 1 to 10 carbon atoms, alkenyl groups having 2 to 20 carbon atoms, alkynyl groups having 2 to 20 carbon atoms, aralkyl groups having 7 to 20 carbon atoms, halides or
alkyl polyether groups -O-(R⁶-O)ᵣ-R⁵ wherein R⁶ are identical or different and are branched or unbranched, saturated or unsaturated, aliphatic, aromatic or mixed aliphatic/aromatic divalent C₁-C₃₀ hydrocarbon groups, preferably -CH₂-CH₂-, r is an integer from 1 to 30, preferably 3 to 10, and R⁵ are unsubstituted or substituted, branched or unbranched, monovalent alkyl, alkenyl, aryl or aralkyl groups, preferably -C₁₃H₂₇ alkyl group
or
two R¹ form a cyclic dialkoxy group having 2 to 10 carbon atoms, in which case o is < 3,
or two or more silanes of formula I) can be bridged via radicals R¹; and
wherein the radicals R² within a molecule may be identical or different and are linear or branched alkyl groups having 1 to 20 carbon atoms or cycloalkyl groups having 4 to 12 carbon atoms or aryl groups having 6 to 20 carbon atoms or alkenyl groups having 2 to 20 carbon atoms, alkynyl groups having 2 to 20 carbon atoms or aralkyl groups having 7 to 20 carbon atoms; and
wherein the groups X within a molecule may be identical or different from each other and are selected from the groups
-HNC(=O)-, -C(=O)NH-, -C(=O)O-, -OC(=O)-, - OC (=O) NH-, -HNC (=O) O-, -R³NC(=O) NR³-, - R³NC(=NR³)NR³-, -R³NC(=S)NR³-, wherein the radicals R³ within a group X and within a molecule may be identical or different and are selected from a hydrogen atom or as defined for R² under the condition that at least one R³ within each group X is a hydrogen atom; and
wherein the groups A within a molecule may be identical or different from each other and are aromatic groups, and
wherein the groups Y within a molecule may be identical or different from each other and are selected from the groups -HNC(=O)-, -C(=O)NH-, -C(=O)O-, -OC(=O)-, - OC(=O)NH-, -HNC(=O)O-, -R⁴NC (=O)NR⁴-, - R⁴NC(=NR⁴)NR⁴-, -R⁴NC(=S)NR⁴-, wherein the radicals R⁴ within a group Y and within a molecule may be identical or different and are selected from a hydrogen atom or as defined for R² under the condition that at least one R⁴ within each group Y is a hydrogen atom; and wherein each m is independently an integer from 0 to 4, and wherein the silane may also be in the form of oligomers that are formed by hydrolysis and condensation of silanes of formula I).

2. Silane according to Claim 1, **characterized in that** each m = 0.

3. Silane according to either of the preceding claims, **characterized in that** the groups X are selected from the groups
-HNC(=O)-, -C(=O)NH-, -OC(=O)NH-, -HNC(=O)O-, - R³NC(=O)NR³-,
-R³NC (=NR³)NR³-, -R³NC(=S)NR³-.

4. Silane according to any of the preceding claims, **characterized in that** the groups Y are selected from the groups
-HNC(=O)-, -C(=O)NH-, -OC(=O)NH-, -HNC(=O)O-, - R⁴NC(=O)NR⁴-,
-R⁴NC (=NR⁴)NR⁴-, -R⁴NC (=S)NR⁴-.

5. Silane according to any of the preceding claims, **characterized in that** the aromatic groups A are selected from the group consisting of phenyl, naphthyl, pyridyl, pyridazyl, pyrimidyl, pyrazyl, triazyl, quinolyl, pyrrole, furan, thiophene, pyrazole, imidazole, thiazole and oxazole radicals.

6. Silane according to any of the preceding claims, **characterized in that** the radicals R¹ are alkyl groups having 1 to 6 carbon atoms or alkoxy groups having 1 to 6 carbon atoms or halides.

7. Silane according to any of the preceding claims, **characterized in that** the radicals R² are linear or branched alkyl groups having 2 to 8 carbon atoms or cycloalkyl groups having 4 to 8 carbon atoms.

8. Silane according to Claim 1, **characterized in that** it has the following formula II):

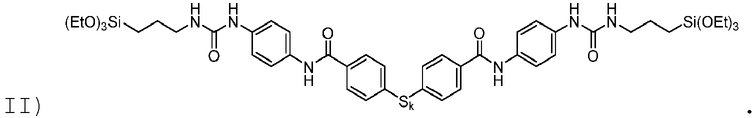

9. Silane according to Claim 1, **characterized in that** it has the following formula III):

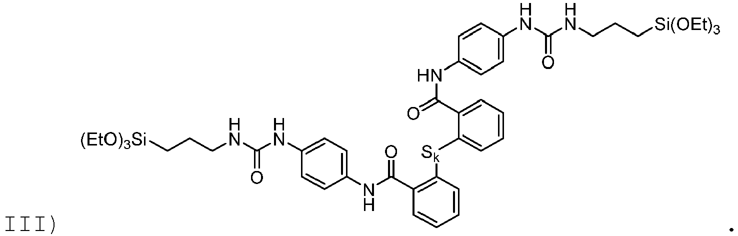

10. Silane according to any of the preceding claims, wherein k is an integer from 2 to 8.

11. Rubber mixture comprising at least one silane according to any of Claims 1 to 10.

12. Vehicle tire comprising the rubber mixture according to Claim 11 in at least one component.

## Revendications

1. Silane selon la formule I) :
**I)** (R¹)ₒSi-R²-X-A-Y-[A-Y-]ₘ-A-Sₖ-A-[-Y-A]ₘ-Y-A-X-R²-Si(R¹)ₒ
dans laquelle o peut être 1, 2 ou 3 et k est un nombre entier supérieur ou égal à 2 et les radicaux R¹ à l'intérieur des groupes silyle (R¹)ₒSi- et des deux côtés de la molécule peuvent être identiques ou différents les uns des autres et sont choisis parmi les groupes alcoxy ayant de 1 à 10 atomes de carbone, les groupes cycloalcoxy ayant de 4 à 10 atomes de carbone, les groupes phénoxy ayant de 6 à 20 atomes de carbone, les groupes aryle ayant de 6 à 20 atomes de carbone, les groupes alkyle ayant de 1 à 10 atomes de carbone, les groupes alcényle ayant de 2 à 20 atomes de carbone, les groupes alcynyle ayant de 2 à 20 atomes de carbone, les groupes aralkyle ayant de 7 à 20 atomes de carbone, les halogénures ou
les groupes alkylpolyéther -O-(R⁶-O)ᵣ-R-⁵, les radicaux R⁶ étant identiques ou différents et étant des groupes hydrocarbonés en C₁-C₃₀ à deux liaisons, aliphatiques, aromatiques ou mixtes aliphatiques/aromatiques, ramifiés ou non ramifiés, saturés ou insaturés, de préférence -CH₂-CH₂-, r étant un nombre entier de 1 à 30, de préférence 3 à 10, et R⁵ étant des groupes alkyle, alcényle, aryle ou aralkyle à une liaison, ramifiés ou non ramifiés, substitués ou non substitués, de préférence le groupe alkyle -C₁₃H₂₇
ou
deux radicaux R¹ forment un groupe dialcoxy cyclique ayant de 2 à 10 atomes de carbone, o étant alors < 3,
ou deux ou plus de deux silanes selon la formule I) peuvent être pontés par l'intermédiaire de radicaux R¹ ;
et
dans laquelle les radicaux R² à l'intérieur d'une molécule peuvent être identiques ou différents et sont des groupes alkyle linéaires ou ramifiés ayant de 1 à 20 atomes de carbone ou des groupes cycloalkyle ayant de 4 à 12 atomes de carbone ou des groupes aryle ayant de 6 à 20 atomes de carbone ou des groupes alcényle ayant de 2 à 20 atomes de carbone, des groupes alcynyle ayant de 2 à 20 atomes de carbone ou des groupes aralkyle ayant de 7 à 20 atomes de carbone ; et
dans laquelle les groupes X à l'intérieur d'une molécule peuvent être identiques ou différents les uns des autres et sont choisis parmi les groupes
-HNC(=O)-, -C(=O)NH-, -C(=O)O-, -OC(=O)-, -OC(=O)NH-, -HNC(=O)O-, -R³NC(=O)NR³-, -R³NC(=NR³)NR³-, -R³NC(=S)NR³-, les radicaux R³ à l'intérieur d'un groupe X et d'une molécule pouvant être identiques ou différents et étant choisis parmi un atome d'hydrogène ou tels que définis pour R² sous la condition qu'au moins un radical R³ à l'intérieur de chaque groupe X soit un atome d'hydrogène ;
et
dans laquelle les groupes A à l'intérieur d'une molécule peuvent être identiques ou différents les uns des autres et sont des groupes aromatiques, et
dans laquelle les groupes Y à l'intérieur d'une molécule peuvent être identiques ou différents les uns des autres et sont choisis parmi les groupes
-HNC(=O)-, -C(=O)NH-, -C(=O)O-, -OC(=O)-, -OC(=O)NH-, -HNC(=O)O-, -R⁴NC(=O)NR⁴-, -R⁴NC(=NR⁴)NR⁴-, -R⁴NC(=S)NR⁴-, les radicaux R⁴ à l'intérieur d'un groupe Y et d'une molécule pouvant être identiques ou différents et étant choisis parmi un atome d'hydrogène ou tels que définis pour R² sous la condition qu'au moins un radical R⁴ à l'intérieur de chaque groupe Y soit un atome d'hydrogène ;
et dans laquelle chaque m indépendamment l'un de l'autre est un nombre entier valant de 0 à 4 ; et le silane pouvant également se trouver sous forme d'oligomères qui sont formés par hydrolyse et condensation de silanes de formule I).

2. Silane selon la revendication 1, **caractérisé en ce que** chaque m est égal à 0.

3. Silane selon l'une quelconque des revendications précédentes, **caractérisé en ce que** les groupes X sont choisis parmi les groupes
-HNC(=O)-, -C(=O)NH-, -OC(=O)NH-,-HNC(=O)O-,
-R³NC(=O)NR³-, -R³NC(=NR³)NR³-, -R³NC(=S)NR³-.

4. Silane selon l'une quelconque des revendications précédentes, **caractérisé en ce que** les groupes Y sont choisis parmi les groupes
-HNC(=O)-, -C(=O)NH-, -OC(=O)NH-,-HNC(=O)O-,
-R⁴NC(=O)NR⁴-, -R⁴NC(=NR⁴)NR⁴-, -R⁴NC(=S)NR⁴-.

5. Silane selon l'une quelconque des revendications précédentes, **caractérisé en ce que** les groupes aromatiques A sont choisis dans le groupe constitué par les radicaux phényle, naphtyle, pyridyle, pyridazyle, pyrimidyle, pyrazyle, triazyle, quinolyle, pyrrole, furane, thiophène, pyrazole, imidazole, thiazole et oxazole.

6. Silane selon l'une quelconque des revendications précédentes, **caractérisé en ce que** les radicaux R¹ sont des groupes alkyle ayant de 1 à 6 atomes de carbone ou des groupes alcoxy ayant de 1 à 6 atomes de carbone ou des halogénures.

7. Silane selon l'une quelconque des revendications précédentes, **caractérisé en ce que** les radicaux R² sont des groupes alkyle linéaires ou ramifiés ayant de 2 à 8 atomes de carbone ou des groupes cycloalkyle ayant de 4 à 8 atomes de carbone.

8. Silane selon la revendication 1, **caractérisé en ce qu'**il présente la formule II) suivante :

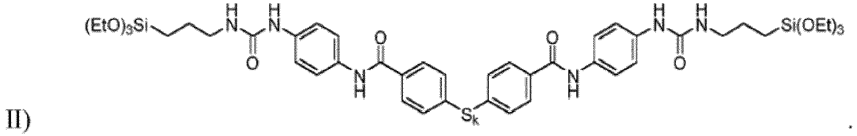

9. Silane selon la revendication 1, **caractérisé en ce qu'**il présente la formule III) suivante :

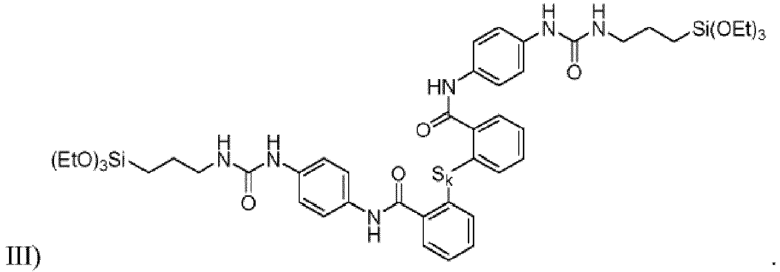

10. Silane selon l'une quelconque des revendications précédentes, dans lequel k est un nombre entier valant de 2 à 8.

11. Composition de caoutchouc contenant au moins un silane selon l'une quelconque des revendications 1 à 10.

12. Pneumatique de véhicule, qui comporte dans au moins un composant la composition de caoutchouc selon la revendication 11.
